Europäisches Patentamt

European Patent Office

Office européen des brevets

(19)

(11) Numéro de publication: **0 380 384**
**A2**

(12)

# DEMANDE DE BREVET EUROPEEN

(21) Numéro de dépôt: **90400103.9**

(51) Int. Cl.5: **C08L 95/00, //(C08L95/00, 23:02)**

(22) Date de dépôt: **15.01.90**

(30) Priorité: **16.01.89 FR 8900449**
**11.01.90 FR 9000298**

(43) Date de publication de la demande:
**01.08.90 Bulletin 90/31**

(84) Etats contractants désignés:
**AT BE CH DE DK ES GB GR IT LI LU NL SE**

(71) Demandeur: **SOCIETE DE PAVAGE ET DES ASPHALTES DE PARIS SOCIETE ANONYME DITE:**
**Route Principale du Port**
**F-92230 Gennevilliers Hauts-de-Seine(FR)**

(72) Inventeur: **Rubio, Raymond**
**14, rue Mauregard, Othis**
**F-77230 Dammartin en Goele(FR)**
Inventeur: **Muller, Jean-Marie**
**191, rue du Carmel, Résidence Bel Horizon**
**F-76230 Bois Guillaume(FR)**
Inventeur: **De Fay, Thierry**
**12, rue Baragué**
**F-78390 Bois d'Arcy(FR)**

(74) Mandataire: **Simonnot, Bernard et al**
**Cabinet Simonnot 35 rue de Clichy**
**F-75442 Paris Cédex 09(FR)**

(54) **Bitume modifiés pour compositions d'asphalte coulé.**

(57) Bitume modifié utilisable en tant que liant pour compositions d'asphalte coulé, caractérisé par le fait qu'il est constitué de bitume renfermant de 5 à 20 % en poids environ d'un copolymère d'oléfine et d'ester aliphatique insaturé ainsi que d'acide aliphatique insaturé, et qu'il peut comprendre en outre, de 5 à 40 % en poids environ d'une huile lourde.

FIG 1

EP 0 380 384 A2

La présente invention concerne des bitumes modifiés utilisables comme liants dans la fabrication de compositions d'asphalte coulé, dont les propriétés rhéologiques ne sont pas détuites par le processus de fabrication de l'asphalte, en particulier-plusieurs heures de malaxage à plus de 250°C, et se maintiennent aux températures négatives. L'invention couvre en outre des compositions d'asphalte coulé renfermant de tels liants à base de bitume modifié.

On sait que les compositions d'asphalte coulé répondent à une formulation générale comprenant essentiellement un liant bitumineux, un squelette minéral, et le cas échéant de la poudre d'asphalte naturel, les proportions des constituants respectifs ainsi que les régimes de malaxage étant fonction de la destination desdites compositions. Cependant, malgré les propriétés rhéologiques remarquables de ce type de composition, l'élasticité sous certaines conditions telles que températures très négatives et/ou vitesse de refroidissement rapide, est relativement faible, ce qui peut se traduire par des dégradations de nature à compromettre la continuité de l'étanchéité conférée par ladite composition.

La présente invention vise donc à remédier aux inconvénients ci-dessus en fournissant des liants à base de bitumes modifiés, présentant d'excellentes propriétés rhéologiques qui se maintiennent aux basses températures en les conférant bien entendu aux compositions à base dudit liant, sans que ces propriétés soient détruites par la température élevée de malaxage.

La Demanderesse a en effet découvert que certains adjuvants subissaient une modification utile attribuée à une réticulation consécutive à une absorption des huiles entrant dans la composition naturelle du bitume, pour former ultérieurement une matrice particulièrement efficace sur le plan de la cohésion des éléments constitutifs d'une composition d'asphalte coulé.

Conformément à l'invention, un liant est constitué de bitume modifié renfermant de 5 à 20 % en poids environ d'un copolymère d'oléfine et d'ester aliphatique insaturé ainsi que d'acide aliphatique insaturé.

Le copolymère mentionné ci-dessus peut être par exemple celui vendu sous la référence "XCS 503" par la société EXXON CHEMICALS, pouvant être incorporé au bitume à une température supérieure à 250°C correspondant par ailleurs aux températures usuelles de fabrication des compositions d'asphalte coulé.

Sans lier l'invention à la valeur d'une théorie, la Demanderesse a déduit de ses travaux que les chaînes longues du copolymère, normalement indépendantes les unes des autres et repliées sur elles-mêmes, se détendent sous l'effet d'huiles contenues dans le bitume et donnent une structure rappelant une réticulation. De ce fait, les constituants du squelette minéral d'une composition de revêtement sont maintenus de manière élastique et permettent à ladite composition de résister au claquage par le froid au-dessous de 0°C. Il est ainsi possible de réaliser des compositions de revêtement d'application spécifique, par exemple étanchéité, joints d'étanchéité, protection d'étanchéité ou voirie , en dosant la teneur de copolymère entre 5 et 20 % en poids environ dans le bitume de base, lui-même dosé dans des proportions comprises entre 5 et 50 % en poids environ dans la composition finale.

La Demanderesse a également découvert qu'il était encore possible d'améliorer les propriétés mécaniques du liant, notamment aux températures négatives, en assurant une régulation du comportement des chaînes polymériques, en particulier une régulation de l'absorption d'huile par le polymère. En effet, une absorption excessive des huiles peut dans certains cas conduire à des effets secondaires nuisibles : par exemple, l'absorption excessive des huiles par le copolymère peut provoquer une perte de maniabilité, ainsi qu'une dureté trop élevée de la composition finale.

Conformément à l'invention, un second liant à base de bitume modifié, ou liant modifié, comprend du copolymère précité pour 5 à 20 % environ du poids du bitume et de 5 à 40 % en poids environ d'une huile lourde, cette dernière pouvant être une huile de lubrification pour gros moteurs thermiques à combustion interne, le bitume de base étant de grade 40/50 ou 80/100.

Au moyen de ce second liant, on peut réaliser des compositions d'asphalte coulé pour revêtement d'étanchéité ou de voirie, par un mélange de 5 à 50 % en poids dudit liant avec le complément à 100 % de minéraux et de poudre d'asphalte naturel. Comme ce sera mieux expliqué ci-après, ce liant permet en outre de mettre en oeuvre des grades de bitume qui ne pouvaient être utilisés jusqu'à maintenant pour les compositions d'asphalte coulé.

L'huile lourde de ce second liant est une huile lubrifiante et elle peut être avantageusement constituée par le produit vendu par la Société ESSO sous la référence EZL 810 ou 815, bien que toute huile lourde répondant aux mêmes spécifications puisse être utilisée. Au cours du brassage de la composition finale d'asphalte, cette huile est absorbée par le copolymère précité qui en effectue une digestion et absorbe également une partie des huiles contenues dans le bitume. En fin de digestion, la réticulation par le copolymère est terminée.

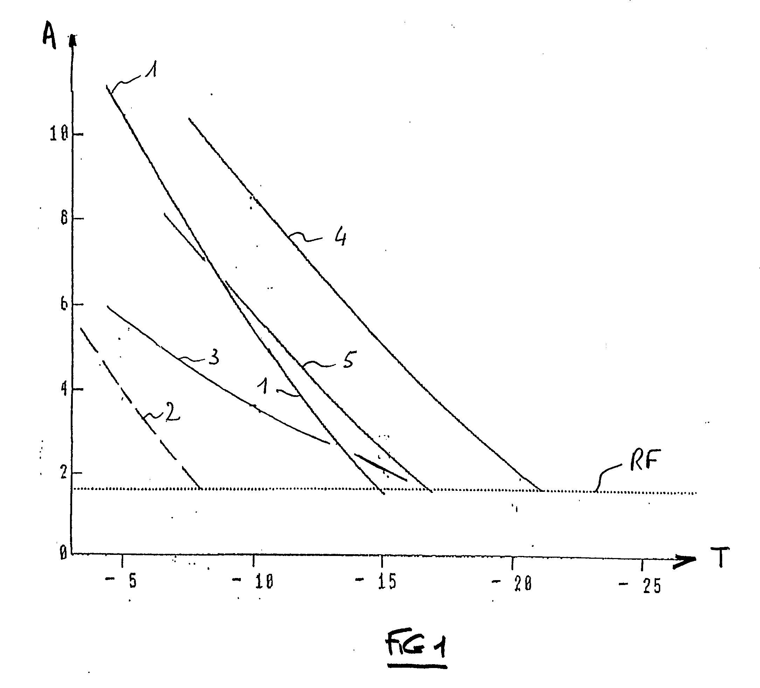

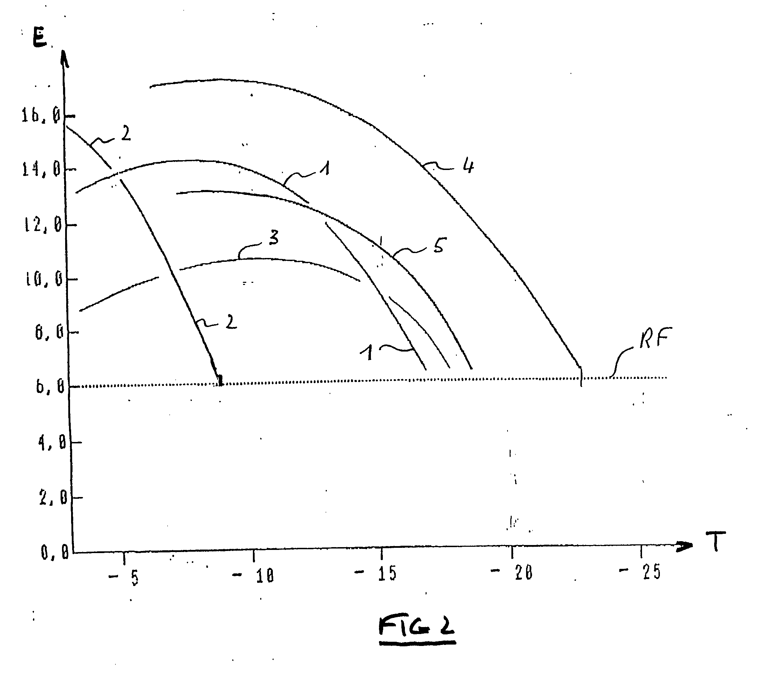

Les exemples suivants, donnés à titre illustratif mais nullement limitatif, feront mieux saisir la portée et l'intérêt de l'invention. L'exemple 1 est relatif aux essais de traction du premier liant modifié, constitué de bitume comportant le copolymère. L'exemple 2 est relatif aux essais de traction du second liant modifié, constitué de bitume comportant le copolymère et l'huile de digestion. L'exemple 2 est en outre explicité par les dessins annexés, sur lesquels la figure 1 est un graphique de l'élongation à la rupture A en % et la figure 2 est un graphique de l'énergie à la rupture E en kJ/m² en fonction de la température T en °C. Les éléments de ces graphiques sont issus d'essais de traction à vitesse de déformation constante.

EXEMPLE 1 -

Les bitumes mis en oeuvre sont des produits de distillation usuels, de grade 40/50 ou 80/100, le copolymère étant le XCS 503 de la gamme des "Polybilts" de EXXON. Les mélanges sont effectués dans des réacteurs contenant 600 g de bitume, au moyen d'une turbine MORITZ de 6 cm à 1000 tr/min, à une température de 210°C, l'addition de XCS 503 étant effectuée en 5 min, avec un temps de mélangeage de 60 min.

Les essais de traction sont effectués sur des éprouvettes découpées dans des plaques obtenues par coulage à chaud en moule d'acier, la vitesse de traction étant de 0,5 mm/min.

Il y a lieu de noter que les bitumes purs se rompent avant d'atteindre un seuil de plasticité, à des déformations faibles à -5°C et très faibles à -10°C. Les contraintes associées et l'énergie mise en jeu sont faibles également, ce qui est caractéristique de ruptures par propagation de fissures. L'adjonction du copolymère permet d'améliorer ce comportement, comme résumé dans le tableau suivant, indiquant les résultats d'essais de traction à -5°C et à -10°C pour les bitumes 40/50 et 80/100 purs et à différentes teneurs en copolymère.

| XCS 503 (%) | 0 | 5 | 10 | 0 | 5 | 10 | 15 |
|---|---|---|---|---|---|---|---|
| Bitume 40/50 (%) | 100 | 95 | 90 | - | - | - | - |
| Bitume 80/100 (%) | - | - | - | 100 | 95 | 90 | 85 |
| Température : - 5°C | | | | | | | |
| Module 1 % (MPa) | 40 | 52 | 27 | 5 | 22 | 16 | 15 |
| Déformation au seuil, (%) | 1,0 | 9,0 | 6,8 | 6,9 | 28,0 | 30,6 | 66,7 |
| Contrainte au seuil, (MPa) | 0,4 | 1,4 | 1,8 | 0,7 | 1,1 | 1,3 | 1,6 |
| Energie au seuil, (J/m²) | 91 | 1830 | 2210 | 985 | 7720 | 9920 | 26200 |
| Déformation à rupture (%) | 1,0 | 9,0 | 8,7 | 6,9 | 92,0 | >400 | >400 |
| Energie à rupture (J/m²) | 91 | 1830 | 3040 | 985 | 24400 | >120600 | >166200 |
| Température : - 10°C | | | | | | | |
| Module 1 % (MPa) | 17 | 93 | 74 | 23 | 56 | 31 | |
| Déformation au seuil, (%) | 0,6 | 6,3 | 4,8 | 0,8 | 4,2 | 21,5 | |
| Contrainte au seuil, (MPa) | 0,1 | 2,3 | 2,3 | 0,2 | 1,7 | 2,1 | |
| Energie au seuil, (J/m²) | 9 | 2990 | 2070 | 25 | 1370 | 11200 | |
| Déformation à rupture (%) | 0,6 | 6,3 | 4,8 | 3,0 | 4,2 | >400 | |
| Energie à rupture (J/m²) | 9 | 2990 | 2070 | 115 | 1370 | >220000 | |

On voit que par exemple dans le bitume 80/100, 5 % de copolymère suffisent pour obtenir un liant non fragile à -5°C mais pas à -10°C. Les résultats sont d'ailleurs les plus intéressants avec le bitume 80/100 et les teneurs les plus convenables en copolymère sont celles donnant une phase continue.

EXEMPLE 2 -

La proportion du second liant modifié dans les compositions finales d'asphalte coulé varie suivant les conditions de service du revêtement, mais dans chaque cas elle est sensiblement la même que la proportion de liant non modifié dans les formules d'asphalte coulé traditionnel.

On donne ci-après la formulation de liants conduisant à des compositions d'asphalte coulé présentant des propriétés très avantageuses :

1) Copolymère : 10 %

Huile lourde : 7,2 %

Bitume 80/100 (complément à 100) : 82,8%

(composition finale 1 :

liant : 17 %

poudre d'asphalte naturel) : 83 %

    2) Copolymère : 10 %

Huile lourde : 13,5 %

Bitume 40/50 (complément à 100) : 76,5%

(composition finale 2 :

liant : 17 %

poudre d'asphalte naturel) : 83 %

A titre comparatif, on a réalisé une formulation de liant sans huile lourde, à savoir :

    3) Copolymère : 10 %

Bitume 80/100 : 90 %

(composition finale :

liant : 17 %

poudre d'asphalte naturel) : 83 % ainsi que deux compositions-témoins classiques, sans copolymère ni huile lourde, à savoir :

    4) Bitume liant 80/100 : 14 %,

poudre d'asphalte naturel 86 %

    5) Bitume liant 40/50 : 14 %,

poudre d'asphalte naturel 86 %

On a traduit les résultats comparatifs des essais de traction effectués à vitesse de déformation constante sur les deux graphiques des figures 1 et 2 annexées.

Sur ces deux graphiques, on a porté un seuil RF de rupture dite fragile. En se référant à la figure 1, on constate que la température de rupture fragile possible est de l'ordre de -20°C à -25°C pour les compositions 1 à 3, par opposition à une température d'environ -8°C pour la composition 5 et d'environ -15°C pour la composition 4.

En se référant à la figure 2, on constate que l'énergie à la rupture est environ deux fois plus élevée pour les compositions 1 à 3 à des températures comprises entre -10°C et -25°C. La vitesse possible de déformation au cours de l'essai de traction est donc deux fois plus forte.

Les résultats ci-dessus concernent les asphaltes purs, mais les asphaltes gravillonnés donnent des graphiques et donc des propriétés analogues.

Les bitumes modifiés selon l'invention permettent de réaliser, en tant que liants modifiés, des compositions d'asphalte coulé particulièrement intéressantes dans les applications suivantes :

- tout revêtement d'étanchéité et de voirie,
- mastics de réparation de fissures dans les revêtements d'asphalte coulé classiques,
- mastics de garnissage des bandes porte-solin mises en protection des têtes de relevés d'étanchéité.

Il est bien entendu que la présente invention n'a été décrite et illustrée qu'à titre explicatif mais nullement limitatif et qu'on pourra y apporter toute modification utile, notamment dans le domaine des équivalences techniques, sans sortir de son cadre.

## Revendications

1. Bitume modifié utilisable en tant que liant pour compositions d'asphalte coulé, caractérisé par le fait qu'il est constitué de bitume renfermant de 5 à 20 % en poids environ d'un copolymère d'oléfine et d'ester aliphatique insaturé ainsi que d'acide aliphatique insaturé.

2. Bitume modifié selon la revendication 1, caractérisé par le fait qu'il est obtenu par mélangeage à une température d'environ 200°C à 250°C de bitume de distillation et de copolymère.

3. Bitume modifié selon l'une des revendications 1 ou 2, caractérisé par le fait qu'il renferme de 5 à 20 % en poids environ dudit copolymère et, en outre, de 5 à 40 % en poids environ d'une huile lourde.

4. Bitume modifié selon la revendication 3, caractérisé par le fait que l'huile lourde est une huile de lubrification de moteurs thermiques à combustion interne.

5. Bitume modifié selon l'une des revendications 3 ou 4, caractérisé par le fait que le bitume de base est de grade 40/50 ou 80/100.

6. Bitume modifié selon l'une quelconque des revendications 3 à 5, caractérisé par le fait qu'il répond à la formulation en poids :

- copolymère : 5 à 20 %
- huile lourde : 5 à 40 %
- bitume 80/100: complément à 100

7. Bitume modifié selon l'une quelconque des revendications 3 à 5, caractérisé par le fait qu'il répond à la formulation en poids :
- copolymère : 5 à 20 %
- huile lourde : 5 à 40 %
- bitume 40/50 : complément à 100

8. Composition d'asphalte coulé, comprenant un squelette minéral et pouvant inclure de l'asphalte naturel, caractérisée par le fait qu'elle comprend de 5 à 50 % en poids environ d'un bitume modifié selon l'une quelconque des revendications 1 à 7.

FIG 1

FIG 2

EP 0 380 384 A2